# EUROPÄISCHE PATENTSCHRIFT

(11) **EP 3 341 629 B1**
(45) Veröffentlichungstag und Bekanntmachung des Hinweises auf die Patenterteilung: **01.01.2020**
(21) Anmeldenummer: 16751463.7
(22) Anmeldetag: 02.07.2016
(51) Int. Cl.: F16F 9/02

(54) **VORRICHTUNG ZUM AUSLÖSEN EINER GASFEDER**
DEVICE FOR TRIGGERING A GAS SPRING
DISPOSITIF PERMETTANT DE DÉCLENCHER UN RESSORT À GAZ

(30) Priorität: 25.08.2015 DE 102015010880
(43) Veröffentlichungstag der Anmeldung: 04.07.2018
(73) Patentinhaber: Wandschneider, Guido, 74927 Eschelbronn (DE)
(72) Erfinder: Wandschneider, Guido, 74927 Eschelbronn (DE)
(74) Vertreter: Clemens, Gerhard
(86) Internationale Anmeldenummer: PCT/DE2016/000264
(87) Internationale Veröffentlichungsnummer: WO 2017/032351

(56) Entgegenhaltungen:
- WO-A1-2009/084915
- DE-A1- 1 931 012
- US-A1- 2008 014 015

## Beschreibung

### TECHNISCHES GEBIET

Die vorliegende Erfindung betrifft eine Vorrichtung zum Auslösen einer Gasfeder mit einer Betätigungseinrichtung, einem mit der Betätigungseinrichtung wirkverbundenen auf einen endseitigen Auslöser der Gasfeder einwirkendem Betätigungsorgan, wobei das Betätigungsorgan auf den Auslöser mittelbar oder unmittelbar einwirkt und insbesondere als kraft- und / oder wegmäßig unter- oder übersetzende Hebelanordnung mit einem Betätigungshebel ausgebildet ist, die mit der Betätigungseinrichtung in Wirkverbindung steht und zumindest mit einem unmittelbar oder mittelbar mit dem Betätigungshebel zusammenwirkenden Auslösehebel, der auf den Auslöser einwirkt, und einem Gehäuse, wobei das Gehäuse eine Gasfederanschlussausnehmung aufweist, über die der obere Endbereich der Gasfeder mit bis ins Innere des Gehäuses durchgeführtem Auslöser anschließbar ist, die Gasfederanschlussausnehmung als durchgehende Ausnehmung mit einem Innengewinde ausgebildet ist, der obere Endbereich der Gasfeder ein Außengewinde aufweist, das in das Innengewinde der Gasfederanschlussausnehmung eingeschraubt ist und Mittel zum klemmenden Fixieren des in die Ausnehmung eingeschraubten oberen Endbereichs der Gasfeder vorhanden sind.

### STAND DER TECHNIK

Gasfedern sind in den unterschiedlichsten Ausführungsformen aus der Praxis bekannt. Zahlreiche Gasfedern umfassen ein integriertes Ventilsystem, wodurch sich die Gasfeder in jeder Position stufenlos feststellen bzw. blockieren lässt. Dabei ist der Kolben an einem Druckrohr abgedichtet und trennt zwei Gasräume voneinander. Bei geschlossenem Ventil ist die Gasfeder arretiert und ermöglicht eine Blockierung in der gewünschten Position. Durch Betätigung des meist als Auslösestössel ausgeführten Auslösers wird das Ventil geöffnet und die Gasfeder lässt sich so stufenlos positionieren. Die Ausschubgeschwindigkeit und Dämpfung kann dabei durch Wahl der Düse im Kolben entsprechend variiert werden.

Gasfedern der hier in Rede stehenden Art werden aufs unterschiedlichste angewendet. Aus der Praxis bekannt ist die Anwendung solcher Gasfedern in Schreibtischstühlen. Ebenso lassen sich durch Gasfedern Autositze oder Flugzeugsitze verstellen oder können Teile von Solarien bewegt werden. Auch lassen sich Schreibtische durch Gasfedern höhenverstellen.

Bei den aus der Praxis bekannten Gasfedern ist ein Betätigungsorgan erforderlich, welches mit einer Betätigungseinrichtung wirkverbunden ist und unmittelbar auf den endseitig der Gasfeder vorgesehenen Auslöser wirkt. Dabei werden beispielsweise bei Schreibtischstühlen Betätigungsorgane verwendet, die in Form einfacher Hebel ausgebildet sind, die in der Regel mit einem endseitigen Bereich unmittelbar auf den Auslöser drücken. Eine solche Ausgestaltung des Betätigungsorgans hat den enormen Nachteil, dass doch erhebliche Kräfte zum Auslösen der Gasfeder erforderlich sind. Hinzu kommt der weitere Nachteil, dass sich die Auslösung nur schwer dosieren lässt, so dass eine Regulierung der Gasfedergeschwindigkeit bei erheblichen Auslösekräften so gut wie nicht möglich ist.

Aus der EP 0 907 842 B1 ist eine Vorrichtung zum Auslösen einer Gasfeder der eingangs genannten Art bekannt. Das Betätigungsorgan der bekannten Vorrichtung umfasst neben dem Auslösehebel noch zwei weitere Hebel, die mit dem Auslösehebel schwenkbar gekoppelt sind.

Des Weiteren sind aus der DE 197 16 720 A1 und aus der EP 1 328 738 B1 weitere Vorrichtungen zum Auslösen einer Gasfeder bekannt, bei denen ebenfalls ein Hebelmechanismus eingesetzt wird. Bei der aus der DE 197 16 720 A1 bekannten Vorrichtung sind zwei Hebel vorhanden, die über ein Kontaktbereich zusammenwirken. Die Wirkverbindung zwischen den Hebeln ist entweder über eine Verzahnung oder über aneinanderliegende Reibflächen realisiert. Die Vorrichtung gemäß der EP 1 328 738 B1 ist so ausgebildet, dass der Kontaktbereich und/oder der Betätigungshebel des Hebelmechanismus eine frei drehbare Rolle oder Kugel zum Abwälzen auf den Betätigungsbereich und/oder den Kontaktbereich aufweist.

Eine Vorrichtung zum Auslösen einer Gasfeder gemäß den Merkmalen des Oberbegriffs des Anspruchs 1 ist aus der DE 20 2013 006 582 U1 bekannt. Zur Sicherung des in das Gehäuse eingebrachten Endbereiches der Gasfeder wird über eine Queranschlussausnehmung ein Gewindestift eingeschraubt, der direkt auf den Endbereich der Gasfeder einwirkt.

Die DE 1 931 012 A1, die als nächstliegender Stand der Technik betrachtet ist, offenbart eine Vorrichtung zum stufenlosen Höhenverstellen der Sitzfläche von Stühlen, bei der unterhalb der Sitzfläche eine kegelstumpfförmige Hohlnabe angeordnet ist, die unterseitig ein zylindrisches Teil aufweist, in dem das Gehäuse einer Gasfeder bis zu einem Anschlag eingeführt ist. An der Hohlnabe ist ein Bedienhebel drehbar angeschlossen, der auf den Auslösestift der Gasfeder einwirkt. Die Position der Gasfeder beziehungsweise des Auslösestiftes relativ zur Hohlnabe und damit zum Bedienhebel wird durch den Anschlag vorgegeben. Eine Feinjustierung ist nicht möglich. Im angeschlagenen Zustand wird das Gehäuse der Gasfeder an der Hohlnabe durch beiderseits an der Hohlnabe entlang eines Schlitzes vorhandenen Klemmlappen bewirkt, die mittels einer Klemmschraube für eine klemmende Fixierung des Gehäuses der Gasfeder innerhalb des zylindrischen Teils der Hohlnabe sorgen.

Die WO 2009/084915 A1 und US 2008/0014015 A1 offenbaren einen Mechanismus für zwei ineinander gesteckte Hohlprofilrohre, wobei der Klemmmechanismus als Rohrschelle ausgebildet ist und die Verklemmung der beiden Rohrprofile über eine Klemmschraube der Rohrschelle erfolgt.

### DARSTELLUNG DER ERFINDUNG

Ausgehend von dem genannten Stand der Technik liegt der vorliegenden Erfindung die Aufgabe beziehungsweise das technische Problem zugrunde eine Vorrichtung zum Auslösen einer Gasfeder der eingangs genannten Art auszugestalten und weiterzubilden, die bei unterschiedlichsten geometrischen Platzverhältnissen der umgebenden Bauteile eingesetzt werden kann, die wirtschaftlich hergestellt werden kann, die eine dauerhaft zuverlässige Funktion gewährleistet, die raumsparend ausgebildet ist und einen zuverlässigen, kompakten Anschluss der Gasfeder mit hoher Präzision gewährleistet.

Die erfindungsgemäße Vorrichtung zum Auslösen einer Gasfeder ist durch die Merkmale des unabhängigen Anspruchs 1 gegeben.

Vorteilhafte Ausgestaltungen und Weiterbildungen sind Gegenstand der von dem unabhängigen Anspruch 1 direkt oder indirekt abhängigen Ansprüche.

Die erfindungsgemäße Vorrichtung zum Auslösen einer Gasfeder, die eine kompakte Umsetzung bei gleichzeitig dauerhaft zuverlässiger Funktion gewährleistet, zeichnet sich dadurch aus, dass das Gehäuse einen offenen Schlitz aufweist, der von der Gasfederanschlussausnehmung bis zur Stirnaußenseite des Gehäuses und zumindest bereichsweise über die Länge der Gasfederanschlussausnehmung verläuft, durch den Schlitz ein linker und rechter auskragender Seitenwandbereich gebildet wird, im Bereich des linken und rechten Seitenwandbereichs die Mittel zum Klemmen und Fixieren vorhanden sind, die den linken und rechten Seitenwandbereich miteinander verspannnen, wodurch eine Klemmkraft auf den in die Gasfederanschlussausnehmung eingebrachten Endbereich der Gasfeder ausgeübt wird, wobei die Mittel zum Klemmen als lösbare Mittel ausgebildet sind, im Bereich des Schlitzes der linke und rechte Seitenwandbereich jeweils eine miteinander fluchtende Querausnehmung aufweist, die Mittel zum klemmenden Fixieren durch die Ausnehmung geführt sind.

Die erfindungsgemäße Vorrichtung zeichnet sich durch einen kompakten Aufbau aus, der wirtschaftlich hergestellt werden kann und eine dauerhaft zuverlässige Fixierung des Endbereiches der Gasfeder gewährleistet, nachdem dieser in seine präzise Endposition innerhalb der Gasfederanschlussausnehmung eingebracht ist.

Die elastischen Eigenschaften der Seitenwandbereiche gewährleisten eine zuverlässige Klemmung.

Eine vorteilhafte Ausgestaltung einer ersten Ausführungsvariante zeichnet sich dadurch aus, dass die Mittel zum klemmenden Fixieren als Schraube ausgebildet sind und die Ausnehmung/en ein Innengewinde aufweist/aufweisen, in das das Außengewinde der Schraube kämmend eingreift.

Eine besonders bevorzugte Ausgestaltung, die einen kompakten Aufbau mit einem geringen Bauvolumen ermöglicht, zeichnet sich dadurch aus, dass die Schraube außenseitig im Wesentlichen mit der Außenwandung des linken und rechten Seitenwandbereiches abschließt und der Schraubenkopf der Schraube in einer Ausnehmung eines Seitenwandbereiches angeordnet ist.

Eine vorteilhafte zweite Ausführungsvariante der erfindungsgemäßen Vorrichtung zeichnet sich dadurch aus, dass die Mittel zum klemmenden Fixieren als Schraube mit Mutter ausgebildet sind, wobei in vorteilhafter Art und Weise zur Gewährleistung einer zuverlässigen Klemmung der Schraubenkopf der Schraube und die Mutter jeweils an der Außenseite des linken und rechten Seitenwandbereiches anliegen.

Um die Handhabung beim Zusammenbau beziehungsweise der Montage zu erleichtern, zeichnet sich eine besonders vorteilhafte Ausgestaltung dadurch aus, dass der Schraubenkopf der Schraube eine Formschlussinnenkontur zum Ansatz eines Werkzeuges aufweist.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematischer Längsquerschnitt durch ein erstes Ausführungsbeispiel einer Vorrichtung zum Betätigen einer Gasfeder mit teilweiser Darstellung einer Betätigungseinrichtung, dem Endbereich einer Gasfeder und einem symbolhaft als Pfeil dargestellten Betätigungsorgan zwischen der Betätigungseinrichtung und dem Auslöser im Endbereich der Gasfeder,
- Fig. 2: schematische Seitenansicht der Vorrichtung gemäß Fig. 1,
- Fig. 3: schematische Stirnansicht der Vorrichtung in Pfeilrichtung A von Fig. 2 gesehen,
- Fig. 4: schematische Stirnansicht der Vorrichtung in Pfeilrichtung B von Fig. 2 gesehen,
- Fig. 5: schematischer Längsquerschnitt durch ein zweites Ausführungsbeispiel einer Vorrichtung zum Betätigen einer Gasfeder mit teilweiser Darstellung einer Betätigungseinrichtung, dem Endbereich einer Gasfeder und einem symbolhaft als Pfeil dargestellten Betätigungsorgan zwischen der Betätigungseinrichtung und dem Auslöser im Endbereich der Gasfeder,
- Fig. 6: schematische Seitenansicht der Vorrichtung gemäß Fig. 5,
- Fig. 7: schematische Stirnansicht der Vorrichtung in Pfeilrichtung A von Fig. 6 gesehen,
- Fig. 8: schematische Stirnansicht der Vorrichtung in Pfeilrichtung B von Fig. 6 gesehen und
- Fig. 9: stark schematisierte Darstellung eines beispielhaften Einsatzgebietes der Vorrichtung zum Auslösen einer Gasfeder für einen Sitz mit einer verstellbaren Rückenlehne.

### WEGE ZUM AUSFÜHREN DER ERFINDUNG

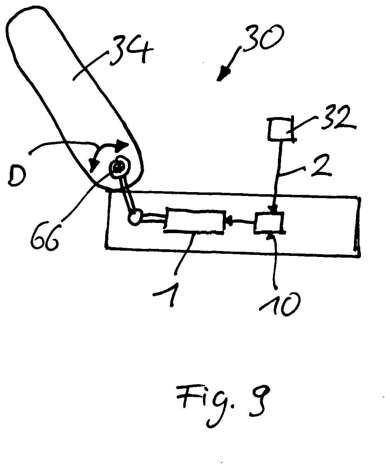

In Fig. 9 ist stark schematisiert ein beispielhafter Einsatzfall einer Vorrichtung 10 zum Auslösen einer Gasfeder 1 für einen Sitz 30 mit verstellbarer Rückenlehne 34 dargestellt. Die Rückenlehne 34 ist um eine Drehachse 66 drehbar (Pfeil D) gelagert und über einen Hebelmechanismus mit der Kolbenstange mit der Gasfeder 1 gekoppelt. Im nicht aktiviertem Zustand der Vorrichtung 10 verriegelt die Gasfeder 1 über den Hebelmechanismus die Drehstellung der Rückenlehne 34. Die Vorrichtung 10 ist über eine Betätigungseinrichtung 2 mit einer Schalteinheit 32 gekoppelt und wirkt auf den Auslöser der Gasfeder ein. Sobald die Schalteinheit 32 betätigt wird, wirkt die Vorrichtung 10 auf den Auslöser der Gasfeder ein, wodurch eine Drehbewegung D der Rückenlehne 34 frei geschaltet wird. Sobald die Schalteinheit 32 deaktiviert wird, sperrt die Gasfeder 1 eine weitere Drehbewegung D der Rückenlehne 34.

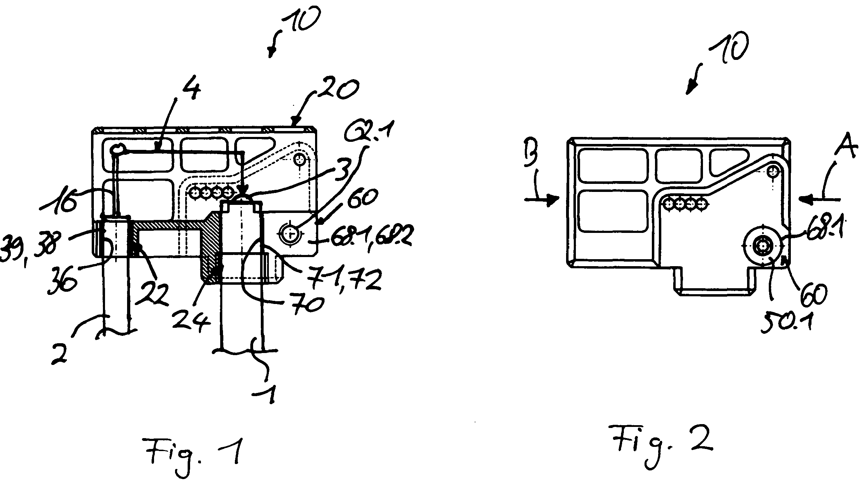

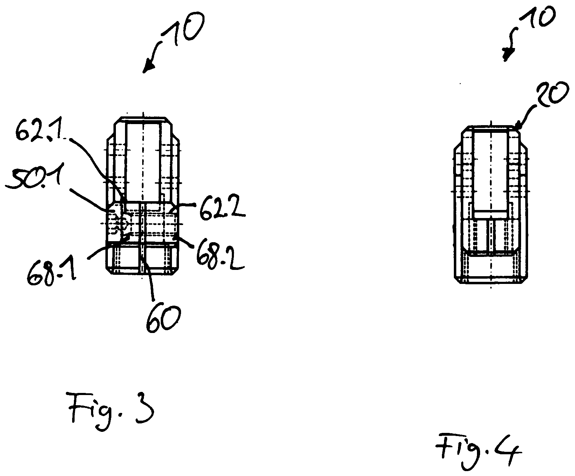

Ein erstes Ausführungsbeispiel einer Vorrichtung 10 zum Auslösen einer Gasfeder ist in den Figuren 1 bis 4 schematisch dargestellt.

Die Vorrichtung 10 besitzt ein Gehäuse 20.

Im linken unteren Stirnrandbereich weist das Gehäuse 20 eine erste Gehäuseanschlusseinheit 22 auf, die als Ausnehmung 36 mit Innengewinde 38 ausgebildet ist. In diese Ausnehmung 36 ist der Endbereich einer Betätigungseinrichtung 2 über ein Außengewinde 39 eingeschraubt, wobei die Betätigungseinrichtung 2 im dargestellten Ausführungsbeispiel als Bowdenzug mit einem Seil 16 ausgebildet ist. Das Seil 16 ist bis in das Innere des Gehäuses 20 geführt und an ein Betätigungsorgan 4 angeschlossen, dass in der Darstellung von Fig. 1 symbolisch als Pfeil dargestellt ist. Das Betätigungsorgan 4 ist als nicht näher dargestellter Hebelmechanismus mit Betätigungshebel und Auslösehebel ausgebildet, wobei der Hebelmechanismus ansich bekannt und beispielsweise in der DE 20 2013 006 582 U1 beschrieben ist. Das Betätigungsorgan 4 wirkt auf einen Auslöser 3 der Gasfeder 1 ein, der im Stirnendbereich der Gasfeder 1 vorhanden ist. Der Endbereich der Gasfeder 1 ist über eine zweite Gehäuseanschlusseinheit 24, die als Gasfederanschlussausnehmung 70 mit Innengewinde 71 ausgebildet ist, wobei der Endbereich zur exakten Positionierung innerhalb der zweiten Gehäuseanschlusseinheit 24 ein Außengewinde 72 aufweist, das in das Innengewinde 71 der Gasfederanschlussausnehmung 70 eingeschraubt ist.

Das Gehäuse 20 weist einen Schlitz 60 auf, der ausgehend von der Gasfederanschlussausnehmung 70 der zweiten Gehäuseanschlusseinheit 24 bis zur in Fig. 1 rechten Stirnseite durchlaufend vorhanden ist, wobei dieser Schlitz 60 über die gesamte Höhe der zweiten Gehäuseanschlusseinheit 24 vorhanden ist. Dadurch wird jeweils ein Seitenwandbereich 68.1, 68.2 auf beiden Seiten des Schlitzes 60 gebildet, der quasi als Kragplatte wirkt. In jedem Seitenwandbereich 68.1, 68.2 ist eine durchgehende Querausnehmung 62.1, 62.2 vorhanden, die ein Innengewinde aufweist. In Querrichtung ist in beiden Querausnehmungen 62.1, 62.2 eine durchgehende Gewindeschraube 50.1 eingeschraubt. Durch das Einschrauben der Gewindeschraube 50.1 werden die beiden Seitenwandbereiche 68.1, 68.2 aufgrund ihrer elastischen Eigenschaften aufeinander zu bewegt, wodurch im Ergebnis eine Klemmkraft auf den in die zweite Gehäuseanschlusseinheit 24 ein eingeschraubter Endbereich der Gasfeder 1 einwirkt und dadurch die Einbauposition der Gasfeder innerhalb des Gehäuses 20 zuverlässig fixiert.

Ein Seitenwandbereich 68.1 weist eine stufenförmige Querausnehmung 62.1 auf, die so ausgebildet ist, dass die Gewindeschraube 50.1 mit ihrem Schraubenkopf nicht über die Außenseite des Gehäuses 20 hinausragt. Die Gewindeschraube 50.1 selbst weist eine Länge auf, derart, dass sie im eingeschraubten Zustand mit ihrem Schraubenschaft nicht über die Außenseite des Gehäuse 20 hinausragt. Dadurch ist eine kompakte Konstruktion möglich, die eine dauerhaft zuverlässige Klemmfunktion gewährleistet.

Zur Erleichterung der Montage weist der Schraubenkopf der Gewindeschraube 50.1 eine Innenumfangskantkontur auf, zum Ansatz eines Werkzeuges.

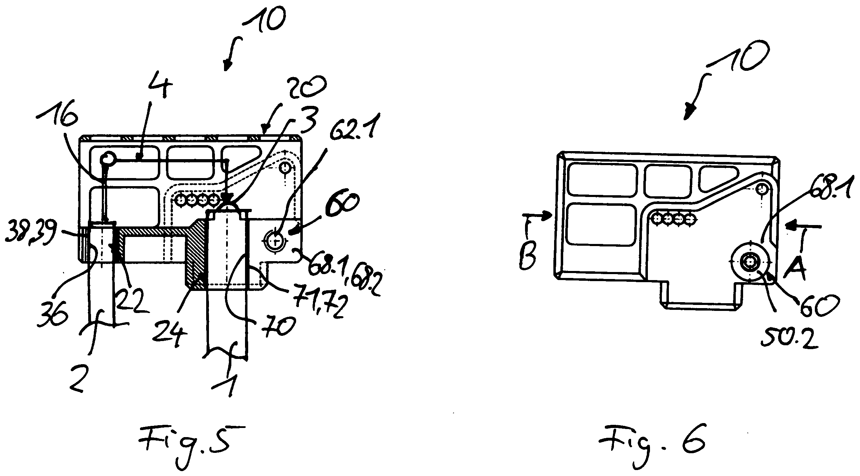

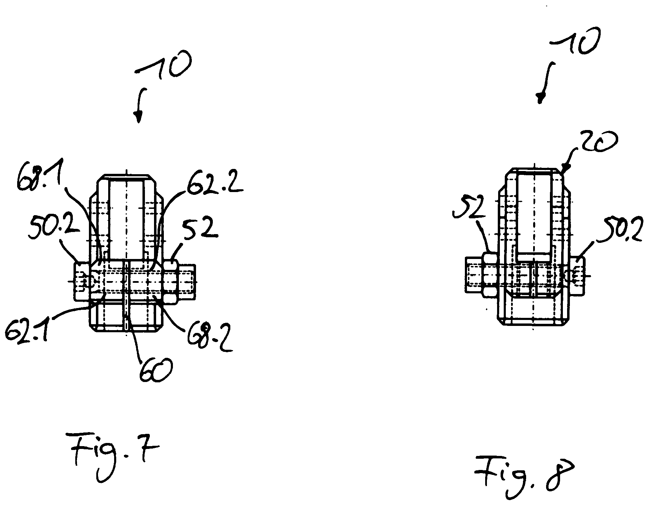

In den Figuren 5 bis 8 ist ein zweites Ausführungsbeispiel einer Vorrichtung zum Auslösen einer Gasfeder 1 dargestellt. Diese Vorrichtung 10 weist im Prinzip denselben Aufbau auf, wie die Vorrichtung 10 gemäß den Figuren 1 bis 4. Gleiche Bauteile tragen dasselbe Bezugszeichen und werden nicht nochmals erläutert.

Im Unterschied zu der Vorrichtung 10 gemäß Fig. 1 weisen jedoch die beiden Querausnehmungen 62.1, 62.2 der Seitenwandbereiche 68.1, 68.2 kein Innengewinde auf. Das Verspannen der Seitenwandbereiche 68.1, 68.2 zum Erzeugen der Klemmkraft erfolgt bei diesem Ausführungsbeispiel über eine durch die Querausnehmung 62.1, 62.2 geführte Schraube 50.2, deren Schraubenkopf außenseitig an einem Seitenwandbereich 68.1 anliegt und die über eine außenseitig auf den gegenüberliegenden Wandbereich 68.2 aufgeschraubte Mutter 52 gekontert ist. Auch hier erfolgt die Erzeugung der Klemmkraft durch einfaches Verschrauben der Schraube 50.2 mit der Mutter 52.

## Patentansprüche

1. Vorrichtung (10) zum Auslösen einer Gasfeder (1) mit
- einer Betätigungseinrichtung (2),
- einem mit der Betätigungseinrichtung (2) wirkverbundenen auf einen endseitigen Auslöser (3) der Gasfeder (1) einwirkendem Betätigungsorgan (4.1, 4.2),
- wobei das Betätigungsorgan (4.1, 4.2) auf den Auslöser (3) mittelbar oder unmittelbar einwirkt und insbesondere als kraft- und/oder wegmäßig unter- oder übersetzende Hebelanordnung mit einem Betätigungshebel ausgebildet ist, die mit der Betätigungseinrichtung (2) in Wirkverbindung steht und zumindest mit einem unmittelbar oder mittelbar mit dem Betätigungshebel zusammenwirkenden Auslösehebel, der auf den Auslöser (3) einwirkt, und
- einem Gehäuse (20), wobei
- das Gehäuse (20) eine Gasfederanschlussausnehmung (70) aufweist, über die der obere Endbereich der Gasfeder (1) mit bis ins Innere des Gehäuses (20) durchgeführtem Auslöser (3) anschließbar ist,
- die Gasfederanschlussausnehmung (70) als durchgehende Ausnehmung ausgebildet ist, und
- Mittel zum klemmenden Fixieren des in die Ausnehmung einbringbaren oberen Endbereichs der Gasfeder (1) vorhanden sind, wobei
- das Gehäuse (20) einen offenen Schlitz (60) aufweist, der von der Gasfederanschlussausnehmung (70) bis zur Stirnaußenseite (66) des Gehäuses (20) und zumindest bereichsweise über die Länge der Gasfederanschlussausnehmung (70) verläuft,
- durch den Schlitz (60) ein linker und rechter auskragender Seitenwandbereich (68.1, 68.2) gebildet wird,
- im Bereich des linken und rechten Seitenwandbereichs (68.1, 68.2) die Mittel zum Klemmen und Fixieren vorhanden sind, die den linken und rechten Seitenwandbereich (68.1, 68.2) miteinander verspannnen, wodurch eine Klemmkraft auf den in die Gasfederanschlussausnehmung (70) eingebrachten Endbereich der Gasfeder (1) ausgeübt wird, wobei
- die Mittel zum Klemmen als lösbare Mittel ausgebildet sind,
- im Bereich des Schlitzes (60) der linke und rechte Seitenwandbereich (68.1, 68.2) jeweils eine miteinander fluchtende Querausnehmung (62.1, 62.2) aufweist,
- die Mittel zum klemmenden Fixieren durch die Ausnehmung (62.1, 62.2) geführt sind, und **dadurch gekennzeichnet, dass** die Gasfederanschlussausnehmung als durchgehende Ausnehmung mit einem Innengewinde ausgebildet ist, in das ein Außengewinde des oberen Endbereichs der Gasfeder eingeschraubt werden kann.

2. Vorrichtung nach Anspruch 1,
- **dadurch gekennzeichnet, dass**
- der Schlitz (60) über die gesamte Länge der Gasfederanschlussausnehmung (70) verläuft.

3. Vorrichtung nach Anspruch 1,
- **dadurch gekennzeichnet, dass**
- die Mittel zum klemmenden Fixieren als Schraube (50.1) ausgebildet sind und die Ausnehmung/en (62) ein Innengewinde aufweist/aufweisen, in das das Außengewinde der Schraube (50.1) kämmend eingreift.

4. Vorrichtung nach Anspruch 3,
- **dadurch gekennzeichnet, dass**
- die Schraube (50.1) außenseitig im Wesentlichen mit der Außenwandung des linken und rechten Seitenwandbereiches (68.1, 68.2) abschließt und der Schraubenkopf der Schraube (50.1) in einer Ausnehmung eines Seitenwandbereiches angeordnet ist.

5. Vorrichtung nach Anspruch 4,
- **dadurch gekennzeichnet, dass**
- die Mittel zum klemmenden Fixieren als Schraube (50.2) mit Mutter (52) ausgebildet sind.

6. Vorrichtung nach Anspruch 5,
- **dadurch gekennzeichnet, dass**
- der Schraubenkopf der Schraube (50.2) und die Mutter (52) jeweils an der Außenseite des linken und rechten Seitenwandbereiches (68.1, 68.2) anliegen.

7. Vorrichtung nach einem oder mehreren der vorstehenden Ansprüche 3 bis 6,
- **dadurch gekennzeichnet, dass**
- der Schraubenkopf der Schraube (50.1, 50.2) eine Formschlussinnenkontur zum Ansatz eines Werkzeuges aufweist.

## Claims

1. A device (10) for triggering a gas spring (1), comprising
- an actuating device (2),
- an actuating element (4.1, 4.2), which is operatively connected to the actuating device (2) and acts on an end-side trigger (3) of the gas spring (1),
- wherein the actuating element (4.1, 4.2) acts directly or indirectly on the trigger (3) and is formed in particular as a lever arrangement, which reduces or increases the transmitted force and/or displacement, comprises an actuating lever and is in operative connection with the actuating device (2), and at least with one trigger lever, which interacts directly or indirectly with the actuating lever and acts on the trigger (3), and
- a housing (20), wherein
- the housing (20) has a gas spring connection recess (70), via which the upper end region of the gas spring (1) is connectable to the trigger (3), which is guided through said recess into the interior of the housing (20),
- the gas spring connection recess (70) is designed as a continuous recess and
- there are means for the clamping fixing of the upper end region of the gas spring (1), which upper end region is insertable into the recess, whereby
- the housing (20) has an open slot (60) which runs from the gas spring connection recess (70) to the front outer side (66) of the housing (20) and runs at least in regions over the length of the gas spring connection recess (70),
- a left and right projecting side wall region (68.1, 68.2) are formed by the slot (60),
- the clamping and fixing means are present in the region of the left and right side wall region (68.1, 68.2) and brace the left and right side wall region (68.1, 68.2) together, as a result of which a clamping force is exerted on the end region of the gas spring (1) that is inserted into the gas spring connection recess (70), whereby
- the clamping means are designed as releasable means,
- in the region of the slot (60) the left and right side wall region (68.1, 68.2) has a respective transverse recess (62.1, 62.2) aligned with each other,
- the clamping fixing means are guided through the recess (62.1, 62.2), and **characterized in that** the gas spring connection recess is designed as a continues recess with an internal thread, in which an external thread of the upper end region of the gas spring can be screwed.

2. The device as claimed in claim 1,
- **characterized in that**
- the slot (60) runs over the entire length of the gas spring connection recess (70).

3. The device as claimed in claim 1,
- **characterized in that**
- the clamping fixing means are designed as a screw (50.1) and the recess(es) (62) has/have an internal thread in which the external thread of the screw (50.1) engages in a meshing manner.

4. The device as claimed in claim 3,
- **characterized in that**
- the screw (50.1) ends on the outer side substantially with the outer wall of the left and right side wall region (68.1, 68.2), and the screw head of the screw (50.1) is arranged in a recess of a side wall region.

5. The device as claimed in claim 4,
- **characterized in that**
- the clamping fixing means are designed as a screw (50.2) with a nut (52).

6. The device as claimed in claim 5,
- **characterized in that**
- the screw head of the screw (50.2) and the nut (52) each lie against the outer side of the left and right side wall region (68.1, 68.2).

7. The device as claimed in one or more of the preceding claims 3 to 6,
- **characterized in that**
- the screw head of the screw (50.1, 50.2) has a form-fitting internal contour for attaching a tool.

## Revendications

1. Dispositif (10) de déclenchement d'un ressort à gaz (1), ledit dispositif comprenant
- un moyen d'actionnement (2),
- un élément d'actionnement (4.1, 4.2) relié fonctionnellement au moyen d'actionnement (2) et agissant sur un déclencheur côté extrémité (3) du ressort à gaz (1),
- l'élément d'actionnement (4.1, 4.2) agissant directement ou indirectement sur le déclencheur (3) et étant conçu notamment comme un ensemble à levier multiplicateur ou démultiplicateur en termes de forceou de trajet, qui comprend un levier d'actionnement et qui est relié fonctionnellement au moyen de déclenchement (2), et au moins un levier de déclenchement coopérant directement ou indirectement avec le levier d'actionnement et agissant sur le déclencheur (3), et
- un boîtier (20),
- le boîtier (20) comportant un évidement de raccordement de ressort à gaz (70) permettant de raccorder la région d'extrémité supérieure du ressort à gaz (1) à un déclencheur (3) guidé jusqu'à l'intérieur du boîtier (20),
- l'évidement de raccordement de ressort à gaz (70) étant conçu comme un évidement continu,
et
- des moyens étant prévus pour fixer par serrage la région d'extrémité supérieure du ressort à gaz (1) qui peut être introduite dans l'évidement,
- le boîtier (20) comportant une fente ouverte (60) qui s'étend de l'évidement de raccordement de ressort à gaz (70) jusqu'au côté extérieur frontal (66) du boîtier (20) et au moins par endroits sur la longueur de l'évidement de raccordement de ressort à gaz (70),
- des régions de paroi latérale saillantes gauche et droite (68.1, 68.2) étant formées à travers la fente (60),
- les moyens de serrage et de fixation étant prévus au niveau des régions de paroi latérale gauche et droite (68.1, 68.2), et lesquels serrent les régions de paroi latérale gauche et droite (68.1, 68.2) l'une avec l'autre, de manière à exercer une force de serrage sur la région d'extrémité du ressort à gaz (1) qui est introduite dans l'évidement de raccordement de ressort à gaz (70),
- les moyens de serrage étant conçus comme moyens amovibles,
- les régions de paroi latérale gauche et droite (68.1, 68.2) comportant chacune, dans la région de la fente (60) un évidement transversal (62.1, 62.2), lesquels évidements transversaux sont alignés l'un avec l'autre,
- les moyens de fixation par serrage étant guidés à travers l'évidement (62.1, 62.2), et **caractérisé en ce que** l'évidement de raccordement de ressort à gaz est conçu comme un évidement continu pourvu d'un filetage intérieur dans lequel peut être vissé un filetage extérieur de la région d'extrémité supérieure du ressort à gaz.

2. Dispositif selon la revendication 1,
- **caractérisé en ce que**
- la fente (60) s'étend sur toute la longueur de l'évidement de raccordement de ressort à gaz (70).

3. Dispositif selon la revendication 1,
- **caractérisé en ce que**
- les moyens de fixation par serrage sont conçus comme une vis (50.1) et l'au moins un évidement (62) comporte un filetage intérieur dans lequel s'engrène le filetage extérieur de la vis (50.1).

4. Dispositif selon la revendication 3,
- **caractérisé en ce que**
- la vis (50.1) se termine du côté extérieur sensiblement par la paroi extérieure des régions de paroi latérale gauche et droite (68.1, 68.2) et la tête de la vis (50.1) est disposée dans un évidement d'une région de paroi latérale.

5. Dispositif selon la revendication 4,
- **caractérisé en ce que**
- les moyens de fixation par serrage sont conçus comme une vis (50.2) pourvue d'un écrou (52).

6. Dispositif selon la revendication 5,
- **caractérisé en ce que**
- la tête de la vis (50.2) et l'écrou (52) viennent chacun en appui sur le côté extérieur des régions de paroi latérale gauche et droite (68.1, 68.2).

7. Dispositif selon l'une au moins des revendications précédentes 3 à 6,
- **caractérisé en ce que**
- la tête de la vis (50.1, 50.2) présente un contour intérieur s'adaptant à la forme du téton d'un outil.
